# EUROPÄISCHE PATENTSCHRIFT

(11) **EP 2 324 327 B1**
(45) Veröffentlichungstag und Bekanntmachung des Hinweises auf die Patenterteilung: **27.03.2013**
(21) Anmeldenummer: 09782473.4
(22) Anmeldetag: 01.09.2009
(51) Int. Cl.: G07F 15/00, G01D 4/02, B60L 11/18, H02J 3/32, G06Q 20/00

(54) **MOBILER STROMZÄHLER ZUM ORTSUNABHÄNGIGEN STROMBEZUG UND/ODER ZUR ORTSUNABHÄNGIGEN STROMEINSPEISUNG EINER MOBILEN SPEICHER- UND VERBRAUCHSEINHEIT**
MOBILE ELECTRICITY METER FOR THE LOCATION-INDEPENDENT POWER INTAKE OF AND/OR FOR THE LOCATION-INDEPENDENT POWER FEED BY A MOBILE STORAGE AND CONSUMPTION UNIT
COMPTEUR DE COURANT MOBILE POUR LE RAVITAILLEMENT EN COURANT D'UNE UNITE MOBILE D'ACCUMULATION ET DE CONSOMMATION ET/OU LA REINJECTION DE COURANT DANS LE RESEAU À PARTIR DE CETTE UNITE MOBILE, INDEPENDAMMENT DU LIEU

(30) Priorität: 16.09.2008 DE 102008044527
(43) Veröffentlichungstag der Anmeldung: 25.05.2011
(73) Patentinhaber: EnBW Energie Baden-Württemberg AG, 76131 Karlsruhe (DE)
(72) Erfinder: FREY, Hellmuth, 76227 Karlsruhe (DE); HEIß, Jürgen, 76229 Karlsruhe (DE); KESSLER, Alois, 75417 Mühlacker (DE); MÜNCH, Wolfram, 76593 Gernsbach (DE); NIEHAUS, Thorsten, 76185 Karlsruhe (DE); WALCH, Lars, 76307 Karlsbad (DE)
(74) Vertreter: Meyer-Dulheuer, Karl-Hermann
(86) Internationale Anmeldenummer: PCT/EP2009/061296
(87) Internationale Veröffentlichungsnummer: WO 2010/031690

(56) Entgegenhaltungen:
- WO-A1-2008/026390
- US-A- 5 349 535
- US-A1- 2008 040 223

## Beschreibung

Die Erfindung betrifft einen mobilen Stromzähler zum ortsunabhängigen Strombezug und/oder zur ortsunabhängigen Stromeinspeisung einer mit einem Akkumulator ausgestatteten mobilen Speicher- und Verbrauchseinheit an einer ortsfesten Stromtankstelle.

Zur Abdeckung des wachsenden Energiebedarfs von elektrisch angetriebenen Fahrzeugen werden u.a. öffentlich zugängliche kostenpflichtige oder kostenlose Stromtankstellen genutzt. Derartige Stromtankstellen stellen dabei die für das Aufladen eines Akkumulators eines Elektrofahrzeugs notwendige elektrische Energie bereit. So beschreibt die US-A 4,052,655 A1 eine Stromladeanlage mit mehreren jeweils autark arbeitenden Zapfsäulen, die jeweils mit mindestens einer Steckdose zum Anstecken eines Ladekabels und einer diesem zugeordneten mechanischen Sicherung versehen sind und denen jeweils eine Energiemengenzähleinrichtung und den Strompreis ermittelnde Recheneinrichtung zugeordnet sind. Die Bezahlung erfolgt dabei durch Münzeinwurf, was eine aufwändige Diebstahlsicherung erforderlich macht und einen hohen Wartungs- und Überwachungsaufwand bedingt.

Desweiteren beschreibt die US-A-2008/0040223 ein Energieverwaltungssystem, wobei eine Vielzahl von Elektrogeräten, insbesondere Elektrofahrzeugen, als Energieverbraucher oder als Speichergeräte an ein Stromnetz angeschlossen sind und über eine Internetverbindung mit einem Kontrollserver verbunden sind.

Das Aufladen von Automobilen an jeweils autark arbeitenden, an das Stromnetz angeschlossenen Parkuhren während der Parkzeit ist aus der DE 41 01 053 A1 bekannt, bei der die abgenommene Strommenge durch Geldmünzen oder mit einer Scheckkarte gezahlt wird. Auch die DE 295 05 733 U1 beschreibt ein Ladesystem für Elektroautos mit einem Scheckkarten- oder Münzautomaten. Dabei stellt sich das Problem, dass diverse Manipulationsmöglichkeiten bestehen.

Auch die DE 42 13 414 C2 beschreibt eine Stromladeanlage mit mehreren Stromzapfsäulen, die jeweils mit wenigstens einer Steckdose zum Anstecken eines Ladekabels und mit einer diesem zugeordneten mechanischen Sicherung versehen sind und denen jeweils eine Energiemengenzähleinrichtung und eine den Strompreis ermittelnde Recheneinrichtung zugeordnet sind, wobei ein zentraler Terminal vorgesehen ist, der die mit den Energiemengenzähleinrichtungen aller Stromzapfsäulen signalleitungsverknüpfte Recheneinrichtung enthält und mit den betriebsnotwendigen Komponenten aller Stromzapfsäulen signalleitungsverknüpft ist. Weiterhin ist zwischen dem Terminal und jeder Stromzapfsäule jeweils eine dieser zugeordneten Interfaceeinrichtungen eingeschaltet, die eine den Betriebszustand einer mechanischen Sicherung kontrollierende Sicherungseinrichtung, eine bei Funktionsstörungen ansprechende Sicherungseinrichtung und eine Fehlerströme überwachende Sicherungseinrichtung enthält. Bei dieser Stromtankstelle enthält die Kontrolleinrichtung insbesondere eine Magnetkarten-Leseeinrichtung für Identifikationskarten. Auch eine derartige Vorrichtung muss sehr komplex aufgebaut sein und kann eine missbräuchliche Benutzung nicht verhindern.

Mit steigender Anzahl von Elektrofahrzeugen in den Innenstädten ergibt sich die Problematik, dass eine große Anzahl unterschiedlicher Benutzer eine Stromtankstelle beanspruchen. Es sollte jedoch möglichst eine benutzergerechte Abrechnung erfolgen, da im Gegensatz zu betriebsinternen Stromparkplätzen die Abrechnung nicht von einem einzigen Betreiber beglichen werden muss. So ist insbesondere die Möglichkeit nicht auszuschließen, dass einzelne Energieverbraucher bemüht sind, die gelieferte Energiemenge nicht selbst zu bezahlen. Vor diesem Hintergrund beschreibt die DE 44 14 008 C2 eine Anordnung zur Abgabe von elektrischer Energie an Kraftfahrzeuge mit einem Anschluss an eine elektrische Energieversorgung, einer Kommunikationseinheit, welche eine Eingabevorrichtung zur Bestätigung durch den Benutzer aufweist sowie einer Ausgabevorrichtung für Informationen an den Benutzer, einer Freigabeschaltung, die in Abhängigkeit von der Eingabe des Benutzers die Energieabgabe freischaltet, wobei erst nach einem Abgleich von Informationen aus der Eingabevorrichtung mit Informationen, die als Identifizierungsdaten vom Kraftfahrzeug zu der Freigabeschaltung übertragen werden, eine Freigabe der Energieabgabe erfolgt. Dabei wird insbesondere ein Kartenlesegerät benutzt, wobei eine diesem zugeordnete Karte Angaben über den Benutzer und über das Kraftfahrzeug enthält. Auch eine solche Vorrichtung ist mindestens mit einem Kartenlesegerät ausgestattet, sodass ein Missbrauch beim Strombezug nicht ausgeschlossen werden kann. Weiterhin ermöglicht diese bekannte Vorrichtung auch keine wirkliche benutzerspezifische Abrechnung bei unterschiedlichen Stromlieferanten.

Der vorliegenden Erfindung liegt deshalb die Aufgabe zu Grunde, eine Vorrichtung zum ortsunabhängigen Strombezug und/oder zur ortsunabhängigen Stromeinspeisung einer mobilen Speicher- und Verbrauchseinheit bereitzustellen, welche einen überwachungslosen Betrieb, eine hohe Betriebs- und Funktionssicherheit sowie einen hohen Bedienungskomfort aufweist und insbesondere die missbräuchliche Benutzung verhindert. Weiterhin soll eine benutzerspezifische Abrechnung mit den jeweiligen Stromlieferanten möglich sein.

Diese der Erfindung zugrunde liegende Aufgabe wird durch einen mobilen Stromzähler zum ortsunabhängigen Strombezug und/oder zur ortsunabhängigen Stromeinspeisung einer mit einem Akkumulator ausgestatteten mobilen Speicher- und Verbrauchseinheit an einer ortsfesten Stromtankstelle gelöst, wobei der mobile Stromzähler in eine mobile Speicher- und Verbrauchseinheit integriert oder an einer solchen montierbar ist und der mobile Stromzähler mindestens folgende Komponenten enthält:
- ein zentrales Steuergerät,
- einen Aktor zur Betätigung eines Schalters, um den Strombezug von der Stromtankstelle und/oder die Einspeisung zu starten und zu stoppen,
- ein Kommunikationsmodul zur Aufbereitung von Daten aus dem Steuergerät für die Kommunikation mit der Stromtankstelle und/oder mit einem Abrechnungsserver sowie zur Umwandlung von eintreffenden Signalen in für das Steuergerät verarbeitbare Daten,
- eine Messeinrichtung zur Messung der durchfließenden elektrischen Energie bei der Aufladung des Akkumulators der mobilen Speicher- und Verbrauchseinheit oder beim Einspeisen in die Stromtankstelle,
- ein Verschlüsselungsmodul zur Verschlüsselung der von dem Steuergerät erzeugten Daten und
- ein mit der Messeinrichtung verbundenes Mittel zur Signierung der von der Messeinrichtung ermittelten Daten mit einer Kennnummer.

Gemäß einer bevorzugten Weiterentwicklung der Vorrichtung sind das Kommunikationsmodul, der Aktor, die Messeinrichtung und das Verschlüsselungsmodul mit dem zentralen Steuergerät über interne Schnittstellen verbunden.

Gemäß einer zweckdienlichen Weiterentwicklung ist die Messeinrichtung weiterhin mit einem Ladegerät mit Wechselrichter verbunden. Von Vorteil ist es ferner, wenn das Ladegerät mit Wechselrichter zum Zweck der Aufladung des Akkumulators der mobilen Speicher- und Verbrauchseinheit oder der Stromeinspeisung mit der Stromtankstelle verbindbar ist/sind.

Das zentrale Steuergerät kann insbesondere mindestens aus einem Microprozessor, einem persistenten Datenspeicherelement, einer Einrichtung zur Selbstüberwachung und einer Echtzeituhr bestehen.

Das zentrale Steuergerät ist die Schaltzentrale innerhalb des mobilen Stromzählers. Das Steuergerät bezieht dazu über interne Schnittstellen insbesondere Informationen, die zur Identifikation sowie zur Verschlüsselung der über die Messeinrichtung ermittelten Daten erforderlich sind. Gleichzeitig steuert das Steuergerät den Aktor, der einen Schalter betätigt.

Im Kommunikationsmodul werden die Daten aus dem Steuergerät für die Kommunikation mit der Stromtankstelle und/oder für die Kommunikation mit einem Abrechnungsserver aufbereitet. Dazu werden die Daten in übertragungsfähige Signale auf der Basis geeigneter standardisierter oder proprietärer Protokolle umgewandelt. Die Kommunikation erfolgt bidirektional, das heißt das Kommunikationsmodul wandelt ebenso eintreffende Signale in für das Steuergerät verarbeitbare Daten um.

Insbesondere kann das Kommunikationsmodul einen modularen Aufbau aufweisen, der eine einfache Adaption an verschiedene Übertragungsmedien, Datenübertragungsprotokolle und Datenübertragungsstandards durch Parametrisierung oder einen Modulwechsel erlaubt.

Die Messeinrichtung misst die Menge der durchfließenden elektrischen Energie, vorzugsweise in kWh, und übermittelt diese an das Steuergerät. Dieser Prozess ist bidirektional, das heißt es kann sowohl ein Ladeprozess als auch gegebenenfalls ein Einspeiseprozess an die Stromtankstelle gemessen und überwacht werden.

Die Messeinrichtung sollte dazu vorzugsweise eine Signatureinrichtung enthalten oder derart mit einer Signatureinrichtung verbunden sein, dass eine eichrechtliche Zulassung dieser Kombination und der damit erzeugten signierten Messwerte für Abrechnungszwecke erzielt werden kann.

Das Verschlüsselungsmodul sollte vorzugsweise Verschlüsselungsverfahren unterstützen, die den vom deutschen Bundesamt für Sicherheit in der Informationstechnik (BSI) definierten Standards entsprechen, und mindestens einen kryptographisch gesicherten Speicherbereich bereitstellen, in dem die Schlüssel gespeichert werden.

Das Mittel zur Signierung sollte vorzugsweise Signaturverfahren unterstützen, die eine eichrechtliche Zulassung zur Abrechnung der damit signierten Mess-, Verbrauchs- und Steuerinformationen ermöglichen.

Mit Hilfe des Verschlüsselungsmoduls wird mindestens der über die Messeinrichtung ermittelte Verbrauchs- oder Einspeisewert verschlüsselt. Es kann aber auch für die Verschlüsselung weiterer Fahrzeugzustandsdaten verwendet werden, um deren Übertragung sicherer zu gestalten. Das Mittel zur Signierung sollte mindestens die Verbrauchs- und/oder die Einspeisedaten mit einem eindeutigen Signaturstempel, vorzugsweise einer Kennnummer, zur Identifikation auf dem Abrechnungsserver versehen.

Die Funktionalität des Stromzählers kann durch externe Schnittstellen des Steuergeräts zu weiteren Komponenten der Speicher- und Verbrauchseinheit zusätzlich erweitert werden. Gemäß einer bevorzugten Weiterentwicklung der Vorrichtung sind/ist mit dem zentralen Steuergerät weiterhin ein Bordcomputer, ein Display, ein Eingabegerät und/oder eine Vorrichtung zur Ortung verbunden. So können gegebenenfalls mithilfe des an der Speicher- und Verbrauchseinheit angebrachten Ortungssystems Daten über den Aufenthaltsort der Speicher- und Verbrauchseinheit über Funk an eine Stromtankstelle oder direkt zu einem Abrechnungsserver übertragen werden. Weiterhin kann das Eingabegerät gegebenenfalls als Lesegerät ausgestaltet sein, welches die Kennnummer von einem portablen Datenspeichermedium des Nutzers der Speicher- und Verbrauchseinheit liest, beispielsweise von einer Kreditkarte, einem Transponderchip oder einem RFID. Über das Eingabegerät könnte gemäß einer Ausführungsvariante die Eingabe der Kennnummer oder einer sonstigen Benutzererkennung, beispielsweise eines PIN-Codes oder einer Kreditkartennummer, erfolgen.

Die Speicher- und Verbrauchseinheit kann im Sinne der vorliegenden Erfindung vorzugsweise ein Fahrzeug mit mindestens einem elektrischen Antrieb sein. Unter einem derartigen Elektrofahrzeug wird ein Fahrzeug mit mindestens einem elektrischen Antrieb verstanden. Dies beinhaltet auch die Klasse der Fahrzeuge, die nur ergänzend mit einem elektrischen Antrieb ausgestattet sind, wie beispielsweise Hybridfahrzeuge. Wesentliches Merkmal eines Elektrofahrzeuges in diesem Sinne ist die Notwendigkeit eines elektrischen Energiespeichers, also einer Batterie bzw. eines Akkumulators. Durch Anbindung an ein elektrisches Versorgungsnetz kann dieser Akkumulator regelmäßig aufgeladen werden. Die Speicher- und Verbrauchseinheit im Sinne der vorliegenden Erfindung kann weiterhin auch eine Vorrichtung zur Bereitstellung von elektrischer Energie sein. Dabei können insbesondere auch die oben genannten Elektrofahrzeuge, also deren Akkumulatoren, zum Einspeisen von elektrischer Energie genutzt werden. Es kann weiterhin zweckmäßig sein, das Elektrofahrzeug dazu zusätzlich mit einer Vorrichtung zur Gewinnung von elektrischer Energie zu kombinieren, also beispielsweise mit einer auf dem Dach des Elektrofahrzeugs montierten Fotovoltaikanlage.

Als Stromtankstelle wird im Sinne dieser Erfindung eine Ladestation für eine mobile Speicher- und Verbrauchseinheit verstanden. Eine solche Stromtankstelle kann sich dazu im privaten Besitz in dessen Hausnetz befinden oder im Besitz eines Dritten an einem, ggf. öffentlich, für den Fahrzeugeigentümer zugänglichen Ort befinden.

Der erfindungsgemäße Stromzähler kann besonders vorteilhaft zur Durchführung eines Verfahrens zum ortsunabhängigen Strombezug und/oder zur ortsunabhängigen Stromeinspeisung einer mobilen Speicher- und Verbrauchseinheit an einer ortsfesten Stromtankstelle eingesetzt werden, wenn eine Vielzahl von Stromtankstellen über Stromleitungen mindestens eines Stromverteilnetzbetreibers mit Strom von mindestens einem Stromlieferanten versorgt werden und mindestens folgende Verfahrensschritte durchgeführt werden:
- Herstellen einer ersten Kommunikationsverbindung zwischen der Speicher- und Verbrauchseinheit und der Stromtankstelle bei räumlicher Annäherung der mobilen Speicher- und Verbrauchseinheit an eine ortsfeste Stromtankstelle, wobei der Speicher- und Verbrauchseinheit eine eindeutige Kennnummer zugeordnet ist und die Stromtankstelle einen Stromzähler mit einer Zählernummer trägt;
- Übermittlung eines Datenpaketes, enthaltend mindestens die Kennnummer und die Zählernummer, über eine zweite Kommunikationsverbindung an einen Abrechnungsserver;
- Zuordnung der Speicher- und Verbrauchseinheit mit Hilfe der Kennnummer zu einem Stromlieferanten und Zuordnung des Stromzählers mit Hilfe der Zählernummer zu einem Verteilnetzbetreiber mit Hilfe der auf dem Abrechnungsserver dazu hinterlegten Daten;
- Freischalten der Stromtankstelle nach erfolgreicher Zuordnung am Abrechnungsserver;
- Abgabe von Strom an die Speicher- und Verbrauchseinheit oder Einspeisung von Strom von der Speicher- und Verbrauchseinheit an die Stromtankstelle über ein Ladekabel oder über eine berührungsfreie, vorzugsweise induktive oder kapazitive, Stromübertragung; und
- Übermittlung der von der Speicher- und Verbrauchseinheit an der Stromtankstelle entnommenen oder eingespeisten Strommenge über die Kommunikationsverbindung an den Abrechnungsserver.

Ein derartiges Verfahren ist Gegenstand der gleichzeitig eingereichten deutschen Patentanmeldung 10 2008 044 526.6. Dieses Verfahren ermöglicht es einem Nutzer der mobilen Speicher- und Verbrauchseinheit, unter Verwendung der erfindungsgemäßen Vorrichtung an einer beliebigen Stromtankstelle mit hohem Bedienungskomfort elektrische Energie zu beziehen oder in ein Stromnetz einzuspeisen, wobei sofort eine wunschgemäße Abrechnung über einen ausgewählten Stromlieferanten erfolgen kann. Ein derartiger Strombezug bzw. eine derartige Stromeinspeisung bietet damit ähnlich gestaltete Nutzungsmöglichkeiten, wie sie bisher lediglich von festen Heimanschlüssen bekannt waren.

Weitere Vorteile des erfindungsgemäßen Stromzählers ergeben sich auch aus der nachfolgenden Erläuterung der Verwendung der Vorrichtung. Vorzugsweise erfolgt bei der räumlichen Annäherung der mobilen Speicher- und Verbrauchseinheit an eine ortsfeste Stromtankstelle ein automatischer Verbindungsaufbau der ersten Kommunikationsverbindung zwischen der Speicher- und Verbraucheinheit und der Stromtankstelle. Diese Ausgestaltung erlaubt dem Nutzer der Speicher- und Verbrauchseinheit, den Strombezug oder die Stromeinspeisung ohne Zeitverzögerung beginnen zu können.

Der vorliegende Stromzähler kann dem Nutzer der Speicher- und Verbrauchseinheit dazu dienen, die von der Stromtankstelle empfangene oder die eingespeiste Energiemenge nachzuvollziehen bzw. zu kontrollieren.

Vorzugsweise erfolgt die erste Kommunikationsverbindung kabelgebunden, insbesondere über das Ladekabel oder über ein separates Datenkabel, oder über Funk, insbesondere über WLAN, ZIGBee, Bluetooth, Transpondertechnologie oder RFID. Dabei kann die zweite Kommunikationsverbindung zwischen der Stromtankstelle und dem Abrechnungsserver kabelgebunden, vorzugsweise über DSL, ISDN, Festnetztelefon oder Powerline (Trägerfrequenzanlage), oder über Funk erfolgen. Alternativ oder auch zusätzlich kann die zweite Kommunikationsverbindung auch direkt zwischen der Speicher- und Verbrauchseinheit und dem Abrechnungsserver über Funk erfolgen. Vorzugsweise wird die zweite Kommunikationsverbindung nach einer der beiden genannten Möglichkeiten über Funk als GSM, GPRS, UMTS, WiMAX, Funkrundsteuerung oder Paging ausgestaltet. Die letztgenannten Funkübertragungssysteme haben den Vorteil, dass auch gegebenenfalls größere Reichweiten möglich sind.

Auf dem Abrechnungsserver werden vorzugsweise Daten zu mindestens einem Übertragungsnetzbetreiber hinterlegt. Es kann weiter zweckdienlich sein, auch Daten zu mindestens einem Stromverteilnetzbetreiber und/oder Daten zu mindestens einem Stromlieferanten zu hinterlegen.

Der Bezug und die Einspeisung von Strom durch eine oder mehrere Speicher- und Verbrauchseinheiten an einer der Stromtankstellen kann zeitlich und/oder preislich und/oder aufgrund von Regelstrategien zur Optimierung der Netzstabilität des Stromverteilnetzbetreibers erfolgen.

Vorzugsweise werden über die erste und/oder die zweite Kommunikationsverbindung Transaktionsdaten übermittelt. Die Transaktionsdaten können dabei insbesondere Strompreise, Strompreis-Ober- und Untergrenzen oder Strommengen sein, denen jeweils ein bestimmter Zeitpunkt oder Zeitraum zugeordnet werden kann. Die Transaktionsdaten werden gegebenenfalls über ein Eingabegerät an den Speicher- und Verbrauchseinheiten erfasst und über ein Display an den Speicher- und Verbrauchseinheiten angezeigt.

Die Abrechnung des Strombezugs an der Stromtankstelle bzw. der entsprechenden Stromeinspeisung kann vorzugsweise auf dem Abrechnungsserver mithilfe einer Software erfolgen. Ein solches Computerprogramm kann dazu einen oder mehrere der oben genannten Verfahrensschritte ausführen.

Weitere Vorteile und Einzelheiten des erfindungsgemäßen Stromzählers ergeben sich aus den anhand der Zeichnungen beschriebenen und die Erfindung nicht einschränkenden Ausführungsbeispielen.

Dabei zeigen
- Fig.1.: eine abstrakte Darstellung des Verfahrens zum ortsunabhängigen Strombezug und/oder zur ortsunabhängigen Stromeinspeisung unter Verwendung des erfindungsgemäßen Stromzählers und
- Fig.2.: die schematische Darstellung eines Ausführungsbeispiels des erfindungsgemäßen Stromzählers.

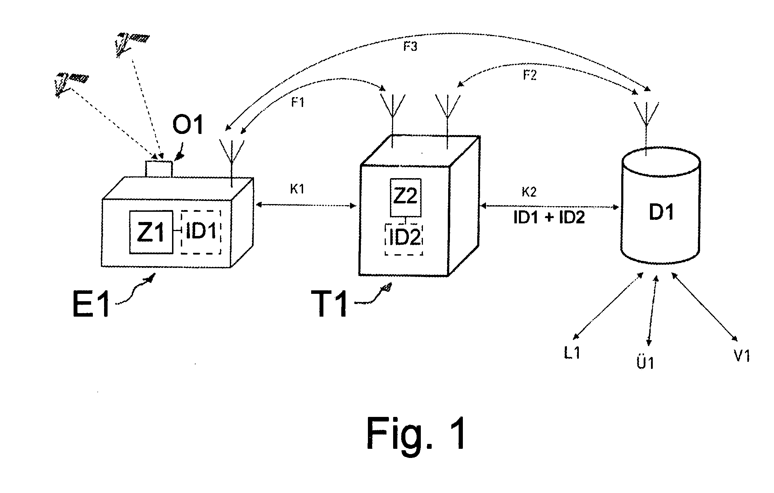

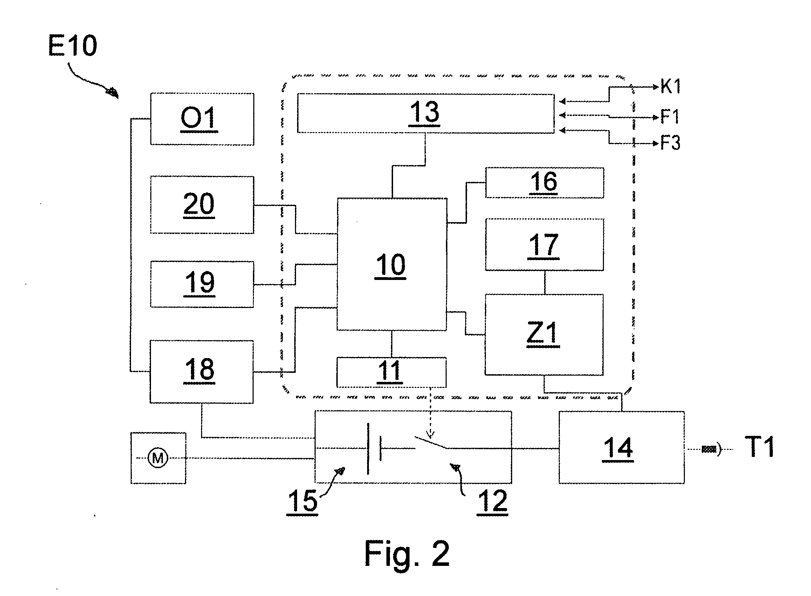

Gemäß der Fig. 1 ist die Anordnung eines Elektrofahrzeuges an einer Stromtankstelle, welche in ein Abrechnungssystem integriert ist, gemäß einem Ausführungsbeispiel abstrakt dargestellt. Die mobile Speicher- und Verbrauchseinheit E1 ist bei diesem Ausführungsbeispiel ein Elektrofahrzeug mit einer Messeinrichtung Z1, dem eine Kennnummer ID1 zugeordnet ist. Die Messeinrichtung Z1 ist Bestandteil des in Fig. 2 dargestellten mobilen Stromzählers E10.

Die ortsfeste Stromtankstelle T1, ausgewählt aus einer Vielzahl von zeichnerisch nicht dargestellten Stromtankstellen T1 - Tn, ist gemäß der Fig. 1 über Stromleitungen mit mindestens einem Verteilnetzbetreiber V1 verbunden und wird über diese Stromleitungen mit elektrischem Strom mindestens eines Stromlieferanten L1 versorgt. Eine für den Strombezug oder die Einspeisung besonders geeignete Stromtankstelle bzw. eine Steuervorrichtung für eine solche Stromtankstelle ist Gegenstand der zeitgleich eingereichten deutschen Patentanmeldung 10 2008 044 528.2.

Beim Annähern des Elektrofahrzeuges E1 an die Stromtankstelle T1 wird zwischen dem Elektrofahrzeug E1 und der Stromtankstelle T1 eine erste Kommunikationsverbindung K1 hergestellt. Diese erste Kommunikationsverbindung K1 ist bei dem dargestellten Ausführungsbeispiel gemäß Fig. 1 als Funkverbindung F1 ausgestaltet. Da diese Funkverbindung F1 lediglich für relativ kurze Distanzen ausgelegt sein muss, eignen sich hierfür insbesondere WLAN, ZIGBee, Bluetooth, Transpondertechnologie oder RFID. Nach Herstellung der ersten Kommunikationsverbindung K1 wird ein Datenpaket über eine zweite Kommunikationsverbindung K2 an ein Datenmanagementsystem (Abrechnungsserver) D1 übermittelt, wobei dieses Datenpaket mindestens die Kennnummer ID1 und die Zählernummer ID2 enthält. Dem Elektrofahrzeug E1 ist eine eindeutige Kennnummer ID1 zugeordnet und die Stromtankstelle T1 trägt einen Stromzähler Z2 mit einer Zählernummer ID2. Auf dem Abrechnungsserver D1 kann nun eine Zuordnung des Elektrofahrzeuges 1 mithilfe der Kennnummer ID1 zu einem Stromlieferanten L1 sowie eine Zuordnung des Stromzählers Z2 mithilfe der Zählernummer ID2 zu einem Verteilnetzbetreiber V1 mithilfe der auf dem Abrechnungsserver D1 dazu hinterlegten Daten erfolgen. Nach einer entsprechenden positiven Zuordnung kann die Stromtankstelle T1 mithilfe der zweiten Kommunikationsverbindung K2 freigeschaltet werden. Die zweite Kommunikationsverbindung K2 zwischen der Stromtankstelle T1 und dem Abrechnungsserver D1 kann kabelgebunden, insbesondere über DSL, ISDN, Festnetztelefon oder Powerline, oder über Funk F2 erfolgen. Gemäß eines alternativen Ausführungsbeispiels kann die Kommunikationsverbindung K2 direkt zwischen dem Elektrofahrzeug E1 und dem Abrechnungsserver D1 über Funk F3 erfolgen.

Die entsprechenden Funkverbindungen F2 und F3 müssen bei beiden Ausführungsbeispielen für größere Entfernungen ausgelegt sein, sodass insbesondere GSM, GPRS, UMTS, WiMAX, Funkrundsteuerung oder Paging in Frage kommen.

Nach der Freischaltung der Stromtankstelle T1 kann nun die Abgabe von Strom an das Elektrofahrzeug E1 oder die Einspeisung von Strom von dem Elektrofahrzeug E1 an die Stromtankstelle T1 über ein Ladekabel oder über eine berührungsfreie induktive Stromübertragung erfolgen. Die letztgenannte Möglichkeit der berührungsfreien induktiven Stromübertragung zwischen dem Elektrofahrzeug E1 und der Stromtankstelle T2 hat den besonderen Vorteil, dass bei der Energieübertragung überhaupt keine physische Verbindung zwischen dem Elektrofahrzeug E1 und der Stromtankstelle T1 notwendig ist, wenn auch die erste Kommunikationsverbindung K1 als Funkverbindung F1 ausgestaltet ist. Daraus ergibt sich für den Nutzer des Elektrofahrzeuges E1 ein besonders hoher Bedienungskomfort.

Nach Beendigung der Energieübertragung kann der von dem Elektrofahrzeug E1 an der Stromtrankstelle T1 entnommene oder eingespeiste Strombetrag über die Kommunikationsverbindung K2 an den Abrechnungsserver D1 übermittelt werden.

Gemäß der Fig. 2 ist das zentrale Steuergerät 10 des mobilen Stromzählers E10 mit nachfolgenden Komponenten verbunden: einem Aktor 11 zur Betätigung eines Schalters 12, um den Strombezug und/oder die Einspeisung zu starten und zu stoppen; einem Kommunikationsmodul 13 zur Aufbereitung von Daten aus dem zentralen Steuergerät 10 für die Kommunikation mit der Stromtankstelle T1 und/oder mit einem Abrechnungsserver D1 sowie zur Umwandlung von eintreffenden Signalen in für das zentrale Steuergerät 10 verarbeitbare Daten; einer Messeinrichtung Z1 zur Messung der durchfließenden elektrischen Energie bei der Aufladung des Akkumulators 15 der mobilen Speicher- und Verbrauchseinheit E1 oder beim Einspeisen in die Stromtankstelle T1, wobei die Messeinrichtung Z1 wiederum mit einem Mittel 17 zur Signierung der von der Messeinrichtung Z1 ermittelten Daten mit einer Kennnummer ID1 verbunden ist, und einem Verschlüsselungsmodul 16 zur Verschlüsselung der von dem zentralen Steuergerät 10 erzeugten Daten. Bei ausreichendem Ladezustand des Akkumulators 15 kann der Motor M des Elektrofahrzeugs E1 betrieben werden.

Im Kommunikationsmodul 13 werden Daten aus dem zentralen Steuergerät 10 für die Kommunikation über die erste Kommunikationsverbindung K1, gegebenenfalls als Funkverbindung F1 ausgestaltet, mit der Stromtankstelle und/oder für die Kommunikation über die Funkverbindung F3 mit dem Abrechnungsserver D1 aufbereitet.

Das zentrale Steuergerät 10 ist die Schaltzentrale innerhalb des mobilen Stromzählers E10. Das zentrale Steuergerät 10 bezieht dazu über interne Schnittstellen insbesondere Informationen, die zur Identifikation sowie zur Verschlüsselung der über die Messeinrichtung Z1 ermittelten Daten erforderlich sind. Gleichzeitig steuert das zentrale Steuergerät 10 den Aktor 11, der einen Schalter 12 betätigt, um bei erfolgter Freigabe den Ladevorgang des Akkumulators 15 zu starten oder zu stoppen. Dieser Vorgang ist bidirektional, das heißt ebenso wird über den Aktor 11 die Einspeisung aus dem Akkumulator 15 in die Stromtankstelle T1 gestartet und gestoppt. Die Freigabe kann dabei über die erste Kommunikationsverbindung K1, gegebenenfalls als Funkverbindung F1 ausgestaltet, und/oder über die Funkverbindung F3 erfolgen.

Der in Fig. 2 dargestellte mobile Stromzähler E10 ist in das Elektrofahrzeug E1 nach Fig. 1 integriert oder an einem solchen montiert.

Das Kommunikationsmodul 13, der Aktor 11, die Messeinrichtung Z1 und das Verschlüsselungsmodul 16 sind gemäß Fig. 2 mit dem zentralen Steuergerät 10 über interne Schnittstellen verbunden.

Die Messeinrichtung Z1 ist weiterhin mit einem Ladegerät mit Wechselrichter 14 verbunden.

Das Ladegerät mit Wechselrichter 14 ist zum Zweck der Aufladung des Akkumulators 15 der mobilen Speicher- und Verbrauchseinheit E1 oder der Stromeinspeisung mit der Stromtankstelle T1 verbindbar.

Mit dem zentralen Steuergerät 10 sind/ist weiterhin ein Bordcomputer 18, ein Display 19, ein Eingabegerät 20 und eine Vorrichtung zur Ortung O1 verbunden.

Der Abrechnungsserver D1 empfängt also über die Kommunikationsverbindungen K2, F2 und/oder F3 Messdaten von den Stromzählern E10 und/oder Z2, welche direkt dem jeweiligen Elektrofahrzeug E1 und der Stromtankstelle T1 zugeordnet werden können. Auf dem Abrechnungsserver ist dazu hinterlegt, welchem Stromlieferanten der mobile Stromzähler E10 mit der Kennnummer ID1 zugeordnet ist und welchem Verteilnetzbetreiber V1 der Stromzähler Z2 mit der Zählernummer ID2 zugeordnet ist. Das ermöglicht erstmals die kundenspezifische Abrechnung der aus dem Stromnetz entnommenen Menge elektrischer Energie bei einem sich örtlich dynamisch verhaltenen Energieverbrauch. Als Lieferant elektrischer Energie wird im Sinne dieser Erfindung ein Energieversorgungsunternehmen verstanden, welches eine Geschäftsbeziehung mit dem Besitzer eines Elektrofahrzeuges E1 zur Belieferung mit elektrischer Energie unterhält. Mithilfe der Stromtankstelle T1 und dem Abrechnungsserver D1 wird es für den Stromlieferanten L1 erstmals möglich, das Elektrofahrzeug E1 abzurechnen, unabhängig davon, welche Stromtankstelle T1 dieses aufsucht und unabhängig davon, ob die Verbrauchsdaten über die zweite Kommunikationsverbindung K2 bzw. F2 von der Stromtankstelle T1 zum Abrechnungsserver D1 gelangen oder ob der Abrechnungsserver D1 diese Daten direkt vom Elektrofahrzeug E1 über eine Funkverbindung F3 erhält.

Als Verteilnetzbetreiber V1 wird ein Energieversorgungsunternehmen verstanden, dessen Geschäftszweck im Aufbau und Betrieb des Strom-Verteilnetzes besteht. In diesem Verteilnetz befindet sich die Stromtankstelle T1 an einem definierten Ort. Der Verteilnetzbetreiber V1 hat mit dem Stromlieferanten L1 eine vertragliche Beziehung, die es dem Stromlieferanten L1 erlaubt, flexibel innerhalb des Gebietes des Verteilnetzbetreibers beliebige Stromtankstellen T1 - Tn dazu zu nutzen, den Besitzer des Elektrofahrzeuges E1 mit elektrischer Energie zu beliefern. Beim Strombezug fällt ein Nutzungsentgelt an, welches der Kunde auf Basis des Stromzählers Z2 über den Stromlieferanten L1 an den Verteilnetzbetreiber V1 bezahlt. Bei der Einspeisung aus dem Elektrofahrzeug E1 in das Netz des Verteilnetzbetreibers V1 erhält der Besitzer des Elektrofahrzeuges E1 eine Einspeisevergütung vom Verteilnetzbetreiber V1, die ebenfalls auf Basis des Stromzählers Z2 errechnet wird.

Als Übertragungsnetzbetreiber Ü1 wird ein Energieversorgungsunternehmen verstanden, dessen Geschäftszweck in dem Aufbau und Betrieb des Übertragungsnetzes besteht. Als weitere Kernaufgabe, die sich der Übertragungsnetzbetreiber Ü1 mit dem Verteilnetzbetreiber V1 teilt, wird die Sicherstellung der Netzstabilität durch ein entsprechendes Angebot von Regelenergie betrieben. Diese Regelenergie kann situationsabhängig durch das Elektrofahrzeug E1 in das Netz des Verteilnetzbetreibers V1 eingespeist werden und wird über die Strecke Elektrofahrzeug E1 mit mobilem Stromzähler E10 - Kommunikationsverbindung K1 - Stromtankstelle T1 - zweite Kommunikationsverbindung K2 - Abrechnungsserver D1 verrechnet.

Neben der Möglichkeit zur Abrechnung des örtlich flexiblen Strombezugs ist über die Anordnung Elektrofahrzeug E1 mit mobilem Stromzähler E10 - erste Kommunikationsverbindung K1 - Stromtankstelle T1 - zweite Kommunikationsverbindung K2 - Abrechnungsserver D1 ebenfalls erstmals die Abrechnung der Einspeisung elektrischer Energie aus dem elektrischen Speicher eines Elektrofahrzeuges E1 in das Netz des Verteilnetzbetreibers V1 oder aber direkt in das Hausnetz zum Eigenverbrauch möglich. Damit bildet das Elektrofahrzeug E1 eine "virtuelle Versorgungsinsel", die in Zeiten hohen Energieverbrauchs das öffentliche Versorgungsnetz des Verteilnetzbetreibers V1 entlastet. Das dargestellte Verfahren stellt dies durch eine differenzierte Messung der entnommenen und eingespeisten Energie sicher, mit der Doppelzählung ausgeschlossen wird. Diese differenzierte Messung kann ggf. auch durch mehrere Messeinrichtungen (Submetering) erfolgen.

Die Einspeisung kann preislich oder zeitlich gesteuert oder aber aufgrund von Regelstrategien zur Optimierung der Netzstabilität des Verteilnetzbetreibers V1 erfolgen. Die erste Kommunikationsverbindung K1 zwischen dem Elektrofahrzeug E1 und der Stromtankstelle T1 kann beliebig gestaltet sein. So kann die Kommunikationsverbindung K1 einerseits kabelgebunden ausgestaltet sein. Dabei ist zu unterscheiden zwischen einer Kommunikation unter Benutzung des Ladekabels, wie beispielsweise wechselstrombasierte Verfahren, insbesondere PLC, vorzugsweise Powerline, nach Homeplug usw. oder Digitalstrom (Informationsübertragung im Basisband in der Nähe des Nulldurchganges des Wechselstromes). Die Kommunikationsverbindung K2 kann aber auch über ein separates Datenkabel erfolgen, welches parallel zum Ladekabel eingesetzt wird, beispielsweise TCP/IP über Ethernetkabel CATS mit RJ45-Buchsen oder als serielle Verbindung RS232, RS485 oder ein sonstiges Bussytem.

Die Ausgestaltung der ersten Kommunikationsverbindung K1 als Funkverbindung F1 über RFID- oder Transpondertechnologie würde beispielsweise genügen, um die Kennnummer ID1 und ggf. den Zählerstand des mobilen Stromzählers E10 auszulesen.

Bei der direkten funkbasierten Kommunikation F3 zwischen dem Elektrofahrzeug E1 und dem Abrechnungsserver D1 nimmt das Elektrofahrzeug E1 über die erste Kommunikationsverbindung K1 Kontakt zu der Stromtankstelle T1 auf, um den Zählerstand des Stromzählers Z2 mit der Zählernummer ID2 abzuholen. Dann schickt das Elektrofahrzeug E1 über die Funkverbindung F3 einen Datensatz mit der Kennnummer ID1 und der Zählernummer ID2 an den Abrechnungsserver und holt sich dort die Freigabe zum Bezug von Strom bzw. zum Einspeisen von Strom. Nach dem "Tankvorgang" erfolgt über dieselbe Strecke die Übermittlung der Stromverbrauchswerte an den Abrechnungsserver D1. Als zweckmäßige Weiterentwicklung des Systems ist eine Kombination mit einer Vorrichtung zur Ortung O1 möglich. Die Ortung kann dazu satellitengestützt, beispielsweise über GPS, Galileo usw., mobilfunkgestützt über die Lokalisierung innerhalb der GSM-Funkzelle oder aber auch als Car-to-car-Kommunikation erfolgen, bei welcher verschiedenste Elektrofahrzeuge E1 sich über Zustandsdaten des Fahrzeugs oder über Informationen, beispielsweise bezüglich der nächsten Stromtankstelle T1 bis Tn, austauschen. Auf Basis dieser Daten ist eine Erweiterung möglich, um den bisherigen Energieverbrauch und den Ladezustand der Batterie mit der geplanten Fahrtroute zu einer rechnerischen Reichweite zu kombinieren und daraus die optimale Stromtankstelle T1 bis Tn in Abhängigkeit vom aktuellen Strombezugspreis und der jeweiligen Netzauslastung zu ermitteln.

### Bezugszeichenliste:

- E1: Mobile Speicher- und Verbrauchseinheit / Elektrofahrzeug
- T1: Ortsfeste Stromtankstelle
- O1: Vorrichtung zur Ortung
- D1: Datenmanagementsystem (Abrechnungsserver)
- L1: Stromlieferant
- Ü1: Übertragungsnetzbetreiber
- V1: Verteilnetzbetreiber
- Z1: Messeinrichtung
- Z2: Stromzähler
- ID1: Kennnummer
- ID2: Zählernummer
- F1, F2, F3: Funkverbindung 1, 2 und 3
- K1, K2: Kommunikationsverbindung 1 und 2
- E10: Mobiler Stromzähler
- 10: Zentrales Steuergerät
- 11: Aktor
- 12: Schalter
- 13: Kommunikationsmodul
- 14: Wechselrichter
- 15: Akkumulator
- 16: Verschlüsselungsmodul
- 17: Mittel zur Signierung
- 18: Bordcomputer
- 19: Display
- 20: Eingabegerät
- M: Motor

## Patentansprüche

1. Mobiler Stromzähler (E10) zum ortsunabhängigen Strombezug und/oder zur ortsunabhängigen Stromeinspeisung einer mobilen Speicher- und Verbrauchseinheit (E1) mit einem Akkumulator (15) an einer ortsfesten Stromtankstelle (T1), wobei der mobile Stromzähler (E10) in eine mobile Speicher- und Verbrauchseinheit (E1) integriert oder an einer solchen anbringbar ist und mindestens folgende Komponenten enthält:
- ein zentrales Steuergerät (10),
- einen Aktor (11) zur Betätigung eines Schalters (12), um den Ladevorgang und/oder den Einspeisevorgang zu starten und zu stoppen,
- ein Kommunikationsmodul (13) zur Aufbereitung von Daten aus dem Steuergerät (10) für die Kommunikation mit der Stromtankstelle (T1) und/oder mit einem Datenmanagementsystem (D1) sowie zur Umwandlung von eintreffenden Signalen in für das Steuergerät (10) verarbeitbare Daten,
- eine Messeinrichtung (Z1) zur Messung der durchfließenden elektrischen Energie bei der Aufladung des Akkumulators (15) der mobilen Speicher- und Verbrauchseinheit (E1) oder beim Einspeisen in die Stromtankstelle (T1),
**gekennzeichnet durch**
- ein Verschlüsselungsmodul (16) zur Verschlüsselung der von dem Steuergerät (10) erzeugten Daten und
- ein mit der Messeinrichtung (Z1) verbundenes Mittel (17) zur Signierung der von der Messeinrichtung (Z1) ermittelten Daten mit einer Kennnummer (ID1).

2. Vorrichtung nach Anspruch 1, **dadurch gekennzeichnet, dass** das Kommunikationsmodul (13), der Aktor (11), die Messeinrichtung (Z1) und das Verschlüsselungsmodul (16) mit dem zentralen Steuergerät (10) über interne Schnittstellen verbunden sind.

3. Vorrichtung nach Anspruch 1, **dadurch gekennzeichnet, dass** die Messeinrichtung (Z1) weiterhin mit einem Ladegerät und/oder Wechselrichter (14) verbunden ist.

4. Vorrichtung nach Anspruch 3, **dadurch gekennzeichnet, dass** das Ladegerät und/oder der Wechselrichter (14) zum Zweck der Aufladung des Akkumulators (15) der mobilen Speicher- und Verbrauchseinheit (E1) oder der Stromeinspeisung mit der Stromtankstelle (T1) verbindbar ist.

5. Vorrichtung nach Anspruch 1, **dadurch gekennzeichnet, dass** das zentrale Steuergerät (10) mindestens einen Microprozessor, ein persistentes Datenspeierelement, eine Einrichtung zur Selbstüberwachung und eine Echtzeituhr enthält.

6. Vorrichtung nach Anspruch 1, **dadurch gekennzeichnet, dass** das Kommunikationsmodul (13) einen modularen Aufbau aufweist, der eine einfache Adaption an verschiedene Übertragungsmedien, Datenübertragungsprotokolle und Datenübertragungsstandards durch Parametrisierung oder einen Modulwechsel erlaubt.

7. Vorrichtung nach Anspruch 1, **dadurch gekennzeichnet, dass** die Messeinrichtung (Z1) eine Signatureinrichtung enthält oder derart mit einer Signatureinrichtung verbunden ist, dass eine eichrechtliche Zulassung dieser Kombination und der damit erzeugten signierten Messwerte für Abrechnungszwecke erzielt werden kann.

8. Vorrichtung nach Anspruch 1, **dadurch gekennzeichnet, dass** das Verschlüsselungsmodul (16) Verschlüsselungsverfahren unterstützt, die den vom deutschen Bundesamt für Sicherheit in der Informationstechnik (BSI) definierten Standards entsprechen, und mindestens einen kryptographisch gesicherten Speicherbereich bereitstellt, in dem die Schlüssel gespeichert werden.

9. Vorrichtung nach Anspruch 1, **dadurch gekennzeichnet, dass** das Mittel (17) zur Signierung Signaturverfahren unterstützt, die eine eichrechtliche Zulassung zur Abrechnung der damit signierten Mess-, Verbrauchs- und Steuerinformationen ermöglichen.

10. Vorrichtung nach Anspruch 1, **dadurch gekennzeichnet, dass** mit dem zentralen Steuergerät (10) weiterhin ein Bordcomputer (18), ein Display (19), ein Eingabegerät (20) und/oder eine Vorrichtung zur Ortung (O1) verbunden sind/ist.

## Claims

1. A mobile electricity meter (E10) for the location-independent power intake of and/or for the location-independent power feed by a mobile storage and consumption unit (E1) with an accumulator (15) at a stationary electric vehicle charging station (T1), said mobile electricity meter (E10) being integrated in a mobile storage and consumption unit (E1) or able to be mounted on such, and containing the following components:
- a central control unit (10),
- an actuator (11) actuator for actuating a switch (12) in order to start or stop the charging process and/or the feeding process,
- a communication module (13) for processing data from the control unit (10) for communication with the electric vehicle charging station (T1) and/or with a data management system (D1) and for converting incoming signals to data that can be processed by the control unit (10),
- a measuring device (Z1) for measuring the electrical energy flowing during charging of the accumulator (15) by the mobile storage and consumption unit (E1) or during feeding to the electric vehicle charging station (T1),
- **characterized by**
- an encryption module (16) for encrypting the data generated by the control unit (10), and
- a device (17) which is connected to the measuring device (Z1) for signing the data acquired by the measuring device (Z1) with an ID number (ID1).

2. The device according to Claim 1,
**characterized in that**
the communication module (13), the actuator (11), the measuring device (Z1), and the encryption module (16) are connected to the central control unit (10) via internal interfaces.

3. The device according to Claim 1,
**characterized in that**
the measuring device (Z1) is additionally connected to a charger and/or an inverter (14).

4. The device according to Claim 3,
**characterized in that**
the charger and/or the inverter (14) can be connected to the electric vehicle charging station (T1) for the purpose of charging the accumulator (15) of the mobile storage and consumption unit (E1) or feeding power.

5. The device according to Claim 1,
**characterized in that**
the central control unit (10) contains at least one microprocessor, a persistent data storage element, a device for self-monitoring and a real-time clock.

6. The device according to Claim 1,
**characterized in that**
the communication module (13) has a modular structure which allows a simple adaptation to different types of transmission media, data communication protocols and data communication standards by setting parameters or changing a module.

7. The device according to Claim 1,
**characterized in that**
the measuring device (Z1) contains a signature device or is connected to a signature device such that authorisation according to calibration regulations for this combination and the signed readings generated therewith can be obtained for billing purposes.

8. The device according to Claim 1,
**characterized in that**
the encryption module (16) supports encryption methods that comply with the standards defined by the German Federal Office for Information Security (BSI), and that provides at least one cryptographically secured storage area in which the key will be stored.

9. The device according to Claim 1,
**characterized in that**
the device (17) for signing supports signature methods that enable authorisation for billing according to calibration regulations for the measuring, consumption and tax information signed therewith.

10. The device according to Claim 1,
**characterized in that**
additionally connected to the central control unit (10) is/are an on-board computer (18), a display (19), an input device (20) and/or a device for location finding (O1).

## Revendications

1. Compteur électrique mobile (E10) pour un approvisionnement en courant indépendamment du lieu et/ou pour une alimentation en courant indépendamment du lieu d'une unité de stockage et de consommation mobile (E1) comportant un accumulateur (15) sur une borne de recharge électrique (T1) stationnaire, dans lequel le compteur électrique mobile (E10) est intégré dans une unité de stockage et de consommation mobile (E1) ou peut être monté sur cette dernière et contient au moins un des composants suivants :
- un appareil de commande central (10),
- un actionneur (11) pour actionner un interrupteur (12), afin de démarrer et arrêter le processus de charge et/ou le processus d'alimentation,
- un module de communication (13) pour la préparation des données provenant de l'appareil de commande (10) en vue de la communication avec la borne de recharge électrique (T1) et/ou avec un système de gestion de données (D1) ainsi que pour convertir les signaux arrivants en données exploitables pour l'appareil de commande (10),
- un dispositif de mesure (Z1) pour mesurer l'énergie électrique qui circule lors du charge de l'accumulateur (15) de l'unité de stockage et de consommation (E1) ou lors de l'alimentation dans la borne de recharge électrique (T1), **caractérisé par**
- un module de cryptage (16) pour crypter les données générées par l'appareil de commande (10) et
- un moyen (17) relié au dispositif de mesure (Z1) pour signer les données déterminées par le dispositif de mesure (Z1) avec un numéro d'identification (ID1).

2. Dispositif selon la revendication 1, **caractérisé en ce que** le module de communication (13), l'actionneur (11), le dispositif de mesure (Z1) et le module de cryptage (16) sont reliés à l'appareil de commande central (10) par l'intermédiaire d'interfaces internes.

3. Dispositif selon la revendication 1, **caractérisé en ce que** le dispositif de mesure (Z1) est en outre relié à un appareil de charge et/ou un onduleur (14).

4. Dispositif selon la revendication 3, **caractérisé en ce que** l'appareil de charge et/ou l'onduleur (14) peuvent être reliés à des fins de charge de l'accumulateur (15) de l'unité de stockage et de consommation mobile (E1) ou de l'alimentation en courant avec la borne de recharge électrique (T1).

5. Dispositif selon la revendication 1, **caractérisé en ce que** l'appareil de commande central (10) contient a moins un microprocesseur, un élément de mémorisation de données persistant, un dispositif d'auto-surveillance et une horloge en temps réel.

6. Dispositif selon la revendication 1, **caractérisé en ce que** le module de communication (13) présente une structure modulaire, qui permet une adaptation simple à différents supports de transmission, protocoles de transmission de données et normes de transmission de données par paramétrage ou par un changement de module.

7. Dispositif selon la revendication 1, **caractérisé en ce que** le dispositif de mesure (Z1) contient un dispositif de signature ou est relié à un dispositif de signature de sorte qu'une autorisation agréée comme étalon légal de cette combinaison et des valeurs de mesure signées ainsi générées puisse être obtenue à des fins de comptabilisation.

8. Dispositif selon la revendication 1, **caractérisé en ce que** le module de cryptage (16) assiste un procédé de cryptage, qui correspond aux normes définies par l'Office Fédéral pour la sécurité en matière de technologies de l'information (BSI) et fournit au moins une plage de mémoire sécurisée cryptographiquement, dans laquelle les clés de cryptage sont mémorisées.

9. Dispositif selon la revendication 1, **caractérisé en ce que** le moyen (17) de signature assiste un procédé de signature, qui permet une autorisation agréée comme étalon légal pour comptabiliser les informations de mesure, de consommation et de commande ainsi signées.

10. Dispositif selon la revendication 1, **caractérisé en ce que** à l'appareil de commande (10) est/sont en outre reliés un ordinateur de bord (18), un écran (19), un appareil d'entrée (20) et/ou un dispositif de localisation (O1).
